# EUROPEAN PATENT SPECIFICATION

(11) **EP 3 540 130 B1**
(45) Date of publication and mention of the grant of the patent: **07.04.2021**
(21) Application number: 19158055.4
(22) Date of filing: 19.02.2019
(51) Int. Cl.: E03C 1/04, F16L 27/08, F16L 37/252, F16L 25/08

(54) **KIT FOR THE INSTALLATION OF A DISPENSER FOR LIQUIDS**
BAUSATZ FÜR DIE INSTALLATION EINES SPENDERS FÜR FLÜSSIGKEITEN
KIT POUR L'INSTALLATION D'UN DISTRIBUTEUR DE LIQUIDES

(30) Priority: 16.03.2018 IT 201800003681
(43) Date of publication of application: 18.09.2019
(73) Proprietor: Idrosanitaria Bonomi S.p.A., 25065 Lumezzane BS (IT)
(72) Inventor: Peli, Paolo, 25065 Lumezzane BS (IT)
(74) Representative: Perani & Partners S.p.A.

(56) References cited:
- DE-A1- 10 243 305
- GB-A- 1 367 721
- US-A- 4 009 731
- US-A- 5 464 045
- US-A1- 2014 048 145

## Description

The present invention relates to a kit for the installation of a dispenser for liquids. Suck a kit can be employed in the hydraulic and taps and fittings sectors, particularly for installing a dispenser of a tap.

It is known in the state of the art attaching a liquid dispenser such as, for example, a dispenser for sinks, by means of a tubular element. The tubular element is durably attached to a support. Furthermore, the tubular element is connectable in fluid communication to a source of liquid to be supplied, for example a water supply network.

During installation, the liquid dispenser is connected in fluid communication with the tubular element. In particular, the dispenser has a tubular cavity adapted to let the liquid to be supplied flow.

According to the state of the art, there exist dispensers of the fixed type, that is to say that, once installed, they can no longer move nor rotate relative to the support. Such dispensers are installed in various ways, for instance it is possible to pass a grub screw into a pass-through hole obtained on the dispenser and screw it into a threaded hole placed in a suitable position on the tubular element.

One second type, typically employed in kitchen sinks, comprises dispensers arranged to rotate around a substantially vertical axis. In this case the grub screw is screwed, rather than directly into the tubular element, into a threaded hole obtained on a connection element which is fitted on the tubular element to rotate around it.

Disadvantageously, the two types of dispensers are constructively mutually exclusive. In other words, it is necessary to produce both the fixed and the orientable variant also for aesthetically similar designs. This requires maintaining two distinct production lines, with subsequent increase in costs.

In the state of the art there are also dispensers conformed such that they provide both variants, i.e. installable in a fixed mode or in an orientable mode. Thereby it is possible to maintain a single production line and decide the installation mode while being put into place. This is possible by means of an additional component, that is a connection member placed between the dispenser and the tubular element.

Document DE 10243305 discloses a "C"-shaped connection member which allows to install the dispenser in the fixed or orientable mode. Such connection member is conformed for interfering with locking means placed on the tubular element. The interference of the connection member with the locking means prevents the dispenser from rotating relative to the tubular element.

The conformation of the connection member defines a rotation angle of the dispenser relative to the tubular element. Disadvantageously, each connection member is conformed to allow a rotation of a preset angle, i.e. each connection member is associated to just one configuration. Consequently, even though there is only one dispenser, it is necessary to produce two different connection members based on the choice between the fixed or orientable mode.

Similarly, document US 5464045 shows a dispenser mounting assembly where the connection member is conformed so as it has a protrusion that allows a limited rotation of the dispenser relative to the tubular element. More specifically, the rotation is allowed until the protrusion encounters abutment surfaces located on the tubular element that prevent further rotation. Therefore, also in this case a fixed mode is not provided.

Document US 4009731 discloses a dispenser comprising a single connection member, annular-shaped, conformed to allow both modes. The connection member of document US 4009731 is also configured for interfering with locking means which prevent the dispenser from rotating relative to the tubular element. Such connection member is configured to be inserted inside the dispenser and the tubular element.

In particular, if the connection member is inserted, it interferes with the locking means and therefore the dispenser cannot freely rotate. The dispenser is on the contrary free to rotate if the connection member is not inserted. Thereby, it is possible to choose the fixed or orientable variant during the installation, producing a single connection member.

Disadvantageously, such connection member is positioned such that it contacts the water flow and it is thus submitted to corrosion and wear. Consequently, the production of the connection member requires a suitable material selection. A connection member for example made of common steel has low corrosion and wear resistance. Therefore, in order to have a connection member which guarantees a good resistance to water flow and durability it is necessary to use special steels, with a resulting cost increase.

### SUMMARY OF THE INVENTION

In this context, the technical task at the basis of the present invention is to propose a kit for installing a liquid dispenser which overcomes the above-mentioned drawbacks of the prior art.

In particular, it is an object of the present invention to make available a kit for installing a liquid dispenser able to allow the installation of the dispenser thereof both in a fixed mode and in an orientable mode.

The technical task identified and objects specified are substantially achieved by a kit for installing a liquid dispenser comprising the technical features explained in one or more of the accompanying claims.

In particular, an embodiment of a kit for installing a liquid dispenser comprises a tubular element which can be connected in fluid communication to a liquid source to be supplied. The tubular element is arranged to be attached to a support.

The kit further comprises a liquid dispenser, which can be connected in fluid communication with the tubular element. The dispenser has a tubular cavity for the passage of the liquid to be supplied.

A connection member can be fixed to the dispenser, in particular inside the tubular cavity of the dispenser. Such a connection member is configured to fit on the tubular element in a locking configuration or in an unlocking configuration. In the unlocking configuration, the connection member allows the reciprocal rotation between the dispenser and the tubular element. In the locking configuration, the reciprocal rotation between the dispenser and the tubular element is prevented.

The kit object of the invention solves the technical problem, as the connection member thereof is arranged for fitting on the tubular element in two distinct configurations. Consequently, it is possible to produce one single version of the dispenser and of the connection member, and select the installation mode during the installation. Furthermore, the connection member of the present invention is arranged such that it is not subjected to corrosion and wear, with no resulting additional costs due to the selection of special materials.

### LIST OF FIGURES

Further features and advantages of the present invention will result more apparent from the indicative, and therefore non-limiting, description of a preferred, but not exclusive, embodiment of a kit for installing a liquid dispenser, as illustrated in the accompanying drawings wherein:

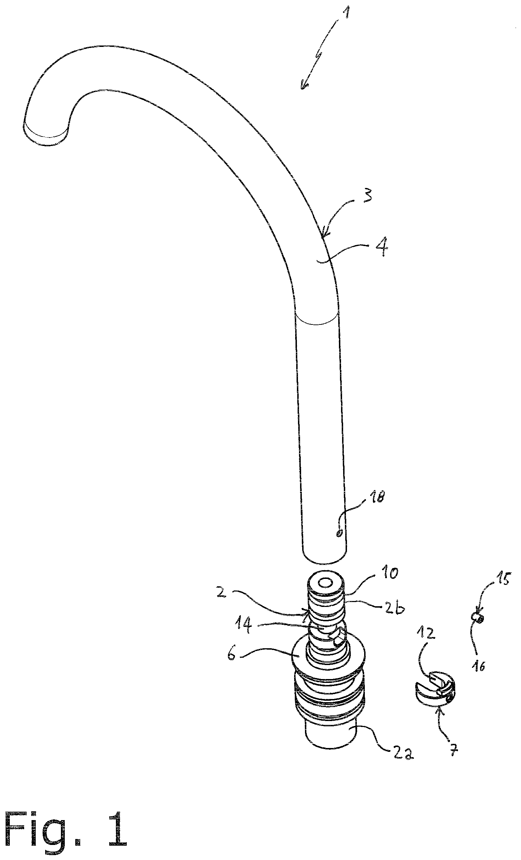

- Figure 1 is a perspective view of a kit for installing a liquid dispenser according to the present invention;

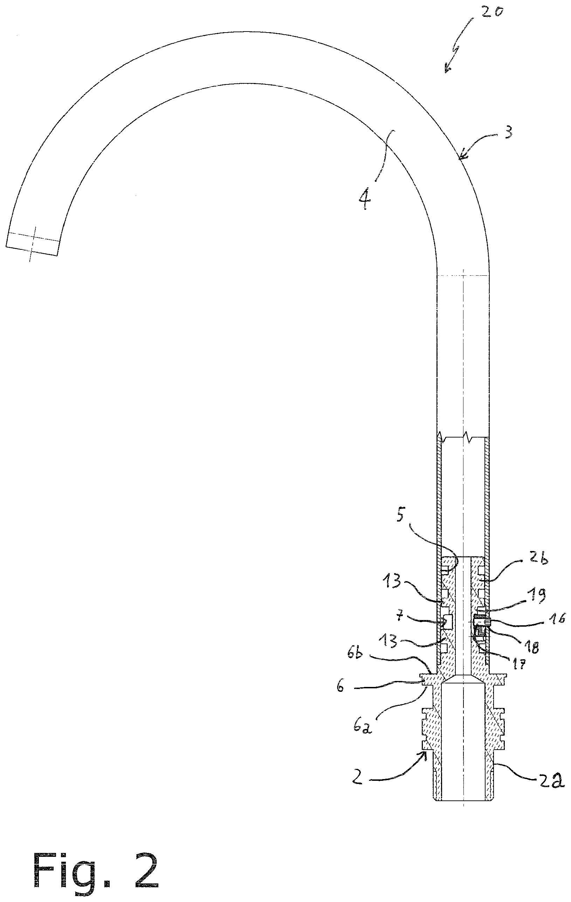

- Figure 2 is a partially sectional side view of the assembled kit of Figure 1;
- Figure 3a is a perspective view of a detail of the kit of Figure 1 during the assembling in one first configuration;
- Figure 3b is a perspective view of a detail of the kit of Figure 1 during the assembling in one second configuration;

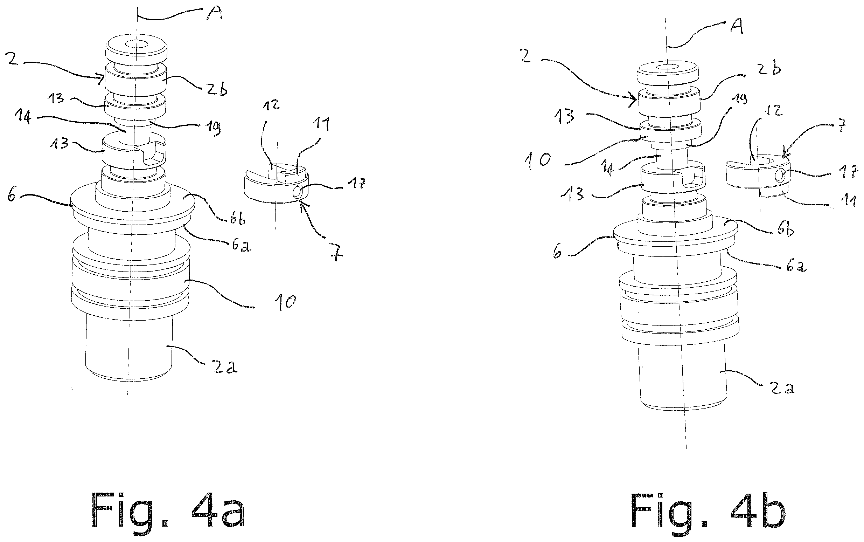

- Figure 4a is an exploded perspective view of a detail of the kit of Figure 1 in the configuration of Figure 3a; and
- Figure 4b is an exploded perspective view of a detail of the kit of Figure 1 in the configuration of Figure 3b.

### DETAILED DESCRIPTION

Referring to the enclosed figures, 1 refers to a kit for installing a liquid dispenser according to the present invention. The present invention also refers to an assembly 20 assembled starting from the kit 1.

The kit 1 comprises a tubular element 2. Such tubular element 2 is connectable in fluid communication with a source of liquid to be supplied, in particular with a water supply network (not illustrated). The tubular element 2 is further arranged to be attachable to a support (not illustrated), for example a shelf or a sink. The tubular element 2 has an external surface 10 arranged to interface both with the support and with the other components of the kit 1. The tubular element 2 extends substantially along a central rectilinear axis "A" which, while in function, is arranged substantially vertically or in any case perpendicularly relative to the surface of the support which the tubular element 2 is attached to.

More particularly, the tubular element 2 provides a first portion 2a, arranged to be inserted into the support, and one second portion 2b, which, in function, extends outwardly of the support thereof.

The first 2a and the second portion 2b are separated by a base flange 6. Such base flange 6 has a first side 6a facing the first portion 2a and a second side 6b facing the second portion 2b.

The tubular element 2 comprises a pair of flanges 13, connected at the second portion 2b. A contact zone 14, whose function will be better specified hereinafter in the present description, is defined between such flanges 13.

The kit 1 further comprises a liquid dispenser 3. Such a dispenser 3 can be connected in fluid communication with the above described tubular element 2. According to the invention, the dispenser 3 comprises a main body 4, implemented according to the already known modes of the state of the art and therefore not further described. The shape of the main body 4 may be of any type, in particular it can aesthetically adapt to the shape of the sink.

The dispenser 3 has a tubular cavity 5, obtained in particular inside the main body 4. Such tubular cavity 5, in itself known, allows the liquid to be supplied to flow inside the dispenser 3. It must be noted that the second portion 2b of the tubular element 2 is arranged to be inserted inside the dispenser 3, in particular inside the tubular cavity 5.

According to the invention, the kit 1 comprises a connection member 7 between the dispenser 3 and the tubular body 2. In particular, the connection member 7 is arranged to be attached to the inside of the tubular cavity 5 of the dispenser 3. Furthermore, the connection member 7 has a seat 12 configured for housing the mentioned contact zone 14 of the tubular element 2.

It is worth observing that the connection member 7 is configured to fit into the tubular element 2 in a locking configuration or in an unlocking configuration. In particular, the connection member 7 is configured to be arranged on the external surface 10 of the tubular element 2. In the unlocking configuration, the connection member 7 is arranged such that it allows the reciprocal rotation between the dispenser 3 and the tubular element 2. In the locking configuration, the connection member 7 is arranged such that it locks the reciprocal rotation between the dispenser 3 and the tubular element 2. The locking and unlocking configurations will be better illustrated hereinafter in the present description.

It must be noted that, according to the invention, the connection member 7 has a "C" shape, that is to say that it is substantially defined as a ring having a lateral discontinuity.

More in detail, the kit 1 comprises locking means 8 of the rotation of the dispenser 3. Such locking means 8 are in particular placed on the tubular element 2 and/or on the connection member 7. Locking means 8, when employed, allow to mount the dispenser 3 in the locking configuration. In contrast, when the locking means 8 are not active the dispenser 3 is mounted on the tubular element 2 in the unlocking configuration.

In particular, locking means 8 comprise a groove 9, which is placed on the external surface 10 of the tubular element 2.

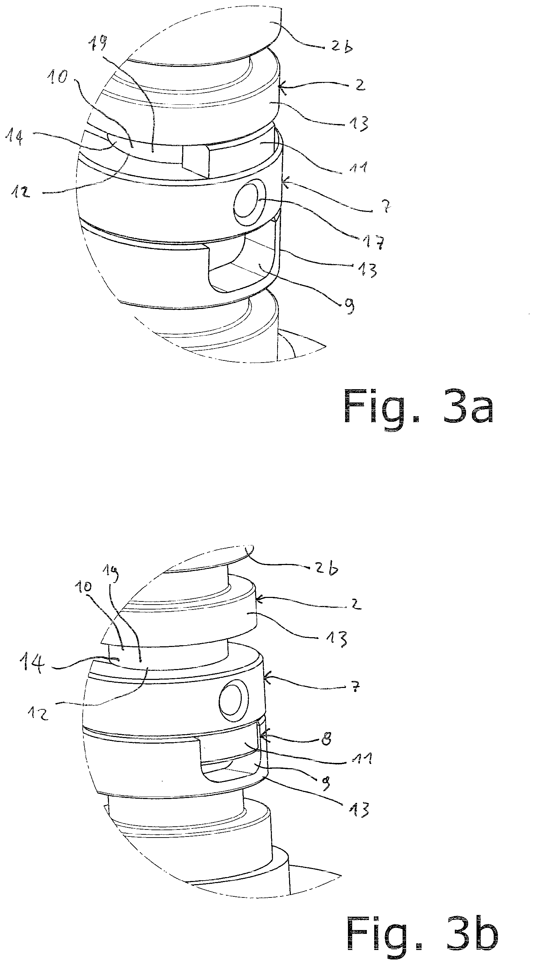

Locking means further comprise a tooth 11, in particular connected to the connection member 7 and configured to be inserted into the groove 9 in the locking configuration as shown for example in figure 3b. In contrast, in the unlocking configuration the tooth 11 is arranged outside the groove 9, such that it does not interfere with the tubular element 2 as shown in figure 3a.

More in detail, it must be observed that the groove 9 on the tubular element 10 has a complementary shape relative to the tooth 11 placed on the connection member 7, in particular the tooth 11 has the same width of the groove 9 arranged for housing it. Consequently, when the tooth 11 is inserted into the groove 9 the connection member 7 cannot rotate relative to the tubular element 2. In contrast, when the tooth 11 is placed outside the groove 9, there are no obstacles to the rotation of the connection member 7.

According to the invention, one first height of the connection member 7 at the tooth 11 is substantially equal to the distance between the flanges 13 of the tubular element 2. This allows the tooth 11, when it is not inserted into the groove 9, to serve for the dispenser 3 for sliding along the central axis "A" of the tubular element 2.

One second height of the connection member 7, in particular lower than the first height, is substantially correspondent to the distance between a projection 19 obtained on the tubular element 2 and the flange 13 placed lower down. This engages the sliding of the dispenser 3 along the central axis "A" of the tubular element 2 even when the tooth 11 is inserted inside the groove 9.

The kit 1 can be installed to implement an assembly 20 of the tubular element 2 and of the dispenser 3. In particular, the tubular element 2 is attached to the support and connected to the water supply network. The connection member 7 is inserted on the tubular element 2, in particular between the flanges 13, such that the contact zone 14 is placed inside the seat 12. More in detail, if the dispenser 3 is intended to be locked on the tubular element 2, the tooth 11 is inserted inside the groove 9 as illustrated in figure 3b. If, by contrast, the dispenser 3 must be left free to rotate, therefore in an unlocking configuration, the tooth 11 is positioned outside of the groove 9 as highlighted in figure 3a.

Once the connection member 7 is duly positioned, the dispenser 3 is inserted on the tubular element 2, in particular inserting the second portion 2b of the tubular element 2 inside the tubular cavity 5 of the dispenser 3. Fixing means 15 are used to lock the dispenser 3 on the connection member 7. Such fixing means 15 can comprise for example a grub screw 16, which is screwed in a blind hole 17 obtained in the connection member 7 passing through a pass-through hole 18 placed on a dispenser 3 end.

## Claims

1. A kit (1) for installing a liquid dispenser (3), comprising:
- a tubular element (2), connectable in fluid communication to a source of liquid to be supplied and attachable to a support;
- a liquid dispenser (3), connectable in fluid communication with said tubular element (2), said dispenser (3) having a tubular cavity (5) for the passage of the fluid to be supplied;
- a connection member (7), attachable to said dispenser (3) internally to said tubular cavity (5), said connection member (7) being configured to fit on said tubular element (2) in a locking configuration or in an unlocking configuration, said connection member (7) being configured to allow the reciprocal rotation of said dispenser (3) and said tubular element (2) in the unlocking configuration and to lock it in the locking configuration;
said tubular element (2) comprising:
- one first portion (2a) arranged to be inserted in the support;
- one second portion (2b) that can be positioned externally from the support;
- a base flange (6) placed between said first (2a) and second portion (2b), said second portion (2b) of said tubular element (2) being configured to be inserted inside the tubular cavity (5) of said dispenser (3) until said flange (6);
the kit (1) further comprising locking means (8) for locking the rotation, arranged on said tubular element (2) and on said connection member (7), said locking means (8) comprising:
- a groove (9) located on an external surface (10) of said tubular element (2),
- a tooth (11) connected to said connection member (7);
**characterized in that**
the tooth (11) is configured to be inserted in said groove (9) in the locking configuration and to be arranged outside the groove (9) in the unlocking configuration so as to not interfere with the tubular element (2).

2. Kit (1) according to the preceding claim, **characterized in that** said connection member (7) features a seat (12) configured to accommodate a contact zone (14) of the tubular element (2).

3. Kit (1) according to the preceding claim, **characterized in that** said tubular element (2) comprises a pair of flanges (13), said contact zone (14) being defined between said flanges (13).

4. Kit (1) according to the preceding claim, **characterized in that** a first height of the connection member (7) at the tooth (11) is substantially equal to the distance between the flanges (13) of the tubular element (2).

5. Kit (1) according to any of the preceding claims, **characterized in that** said connection member (7) features a "C" shape.

6. Kit according to any one of the preceding claims, wherein said connection member (7) is configured to be arranged on said external surface (10) of said tubular element (2).

7. An assembly (20) formed of a tubular element (2) and a liquid dispenser (3) assembled starting from the kit (1) according to any of the preceding claims, wherein said dispenser (3) is rigidly locked on said tubular element (2).

8. An assembly (20) formed of a tubular element (2) and a liquid dispenser (3) assembled starting from the kit (1) according to any of claims 1 to 6, wherein said dispenser (3) is free to rotate relative to said tubular element (2).

## Patentansprüche

1. Kit (1) zum Installieren eines Flüssigkeitsspenders (3), das Folgendes umfasst:
- ein rohrförmiges Element (2), das in Fluidkommunikation mit einer Quelle einer zuzuführenden Flüssigkeit verbindbar und an einem Träger befestigbar ist;
- einen Flüssigkeitsspender (3), der in Fluidkommunikation mit dem rohrförmigen Element (2) verbindbar ist, wobei der Spender (3) einen rohrförmigen Hohlraum (5) für die Durchleitung des zuzuführenden Fluids aufweist;
- eine Verbindungskomponente (7), die intern am rohrförmigen Hohlraum (5) am Spender (3) befestigbar ist, wobei die Verbindungskomponente (7) dazu ausgelegt ist, in einer Verriegelungsauslegung oder in einer Entriegelungsauslegung auf dem rohrförmigen Element (2) zu sitzen, wobei die Verbindungskomponente (7) dazu ausgelegt ist, in der Entriegelungsauslegung eine hin- und hergehende Drehung des Spenders (3) im rohrförmigen Element (2) zu erlauben und ihn in der Verriegelungsauslegung zu verriegeln;
wobei das rohrförmige Element (2) Folgendes umfasst:
- einen ersten Abschnitt (2a), der angeordnet ist, in den Träger eingesteckt zu werden;
- einen zweiten Abschnitt (2b), der außerhalb des Trägers positioniert werden kann;
- einen Basisflansch (6), der zwischen dem ersten (2a) und dem zweiten Abschnitt (2b) platziert werden kann, wobei der zweite Abschnitt (2b) und das rohrförmige Element (2) dazu ausgelegt sind, in den rohrförmigen Hohlraum (5) des Spenders (3) bis zum Flansch (6) eingesteckt zu werden;
wobei das Kit (1) ferner ein Verriegelungsmittel (8) zum Verriegeln der Drehung umfasst, das am rohrförmigen Element (2) und an der Verbindungskomponente (7) angeordnet ist, wobei das Verriegelungsmittel (8) Folgendes umfasst:
- eine Rille (9), die sich auf einer Außenfläche (10) des rohrförmigen Elements (2) befindet,
- einen Zahn (11), der mit der Verbindungskomponente (7) verbunden ist;
**dadurch gekennzeichnet, dass**
der Zahn (11) dazu ausgelegt ist, in der Verriegelungsauslegung in die Rille (9) eingesteckt zu sein und in der Entriegelungsauslegung außerhalb der Rille (9) angeordnet zu sein, um das rohrförmige Element (2) nicht zu beeinträchtigen.

2. Kit (1) nach dem vorhergehenden Anspruch, **dadurch gekennzeichnet, dass** die Verbindungskomponente (7) einen Sitz (12) aufweist, der dazu ausgelegt ist, eine Kontaktzone (14) des rohrförmigen Elements (2) aufzunehmen.

3. Kit (1) nach dem vorhergehenden Anspruch, **dadurch gekennzeichnet, dass** das rohrförmige Element (2) ein Paar von Flanschen (13) umfasst, wobei die Kontaktzone (14) zwischen den Flanschen (13) definiert ist.

4. Kit (1) nach dem vorhergehenden Anspruch, **dadurch gekennzeichnet, dass** eine erste Höhe der Verbindungskomponente (7) am Zahn (11) im Wesentlichen mit dem Abstand zwischen den Flanschen (13) des rohrförmigen Elements (2) gleich ist.

5. Kit (1) nach einem der vorhergehenden Ansprüche, **dadurch gekennzeichnet, dass** die Verbindungskomponente (7) eine "C"-Form aufweist.

6. Kit nach einem der vorhergehenden Ansprüche, wobei die Verbindungskomponente (7) dazu ausgelegt ist, auf der Außenfläche (10) des rohrförmigen Elements (2) angeordnet zu sein.

7. Anordnung (20), die aus einem rohrförmigen Element (2) und einem Flüssigkeitsspender (3), der beginnend beim Kit (1) nach einem der vorhergehenden Ansprüche zusammengesetzt wird, gebildet ist, wobei der Spender (3) starr am rohrförmigen Element (2) verriegelt ist.

8. Anordnung (20), die aus einem rohrförmigen Element (2) und einem Flüssigkeitsspender (3), der beginnend beim Kit (1) nach einem der Ansprüche 1 bis 6 zusammengesetzt wird, gebildet ist, wobei sich der Spender (3) relativ zum rohrförmigen Element (2) frei drehen kann.

## Revendications

1. Kit (1) pour installer un distributeur de liquide (3), comprenant :
- un élément tubulaire (2), pouvant être connecté en communication fluidique à une source de liquide à alimenter et pouvant être fixé à un support ;
- un distributeur de liquide (3), pouvant être connecté en communication fluidique avec ledit élément tubulaire (2), ledit distributeur (3) ayant une cavité tubulaire (5) pour le passage du fluide à alimenter ;
- un élément de connexion (7), pouvant être fixé audit distributeur (3) à l'intérieur de ladite cavité tubulaire (5), ledit élément de connexion (7) étant configuré pour s'adapter sur ledit élément tubulaire (2) dans une configuration de verrouillage ou dans une configuration de déverrouillage, ledit élément de connexion (7) étant configuré pour permettre la rotation réciproque dudit distributeur (3) et dudit élément tubulaire (2) dans la configuration de déverrouillage et pour le verrouiller dans la configuration de verrouillage ;
ledit élément tubulaire (2) comprenant :
- une première partie (2a) disposée pour être insérée dans le support ;
- une seconde partie (2b) qui peut être positionnée à l'extérieur du support ;
- une bride de base (6) placée entre lesdites première (2a) et seconde (2b) parties, ladite seconde partie (2b) dudit élément tubulaire (2) étant configurée pour être insérée à l'intérieur de la cavité tubulaire (5) dudit distributeur (3) jusqu'à ladite bride (6) ;
le kit (1) comprenant en outre des moyens de verrouillage (8) pour verrouiller la rotation, disposés sur ledit élément tubulaire (2) et sur ledit élément de connexion (7), lesdits moyens de verrouillage (8) comprenant :
- une rainure (9) située sur une surface externe (10) dudit élément tubulaire (2),
- une dent (11) reliée audit élément de connexion (7) ;
**caractérisé en ce que**
la dent (11) est configurée pour être insérée dans ladite rainure (9) dans la configuration de verrouillage et pour être disposée à l'extérieur de la rainure (9) dans la configuration de déverrouillage de manière à ne pas interférer avec l'élément tubulaire (2).

2. Kit (1) selon la revendication précédente, **caractérisé en ce que** ledit élément de connexion (7) comporte un siège (12) configuré pour recevoir une zone de contact (14) de l'élément tubulaire (2).

3. Kit (1) selon la revendication précédente, **caractérisé en ce que** ledit élément tubulaire (2) comprend une paire de brides (13), ladite zone de contact (14) étant définie entre lesdites brides (13).

4. Kit (1) selon la revendication précédente, **caractérisé en ce qu'une** première hauteur de l'organe de liaison (7) au niveau de la dent (11) est sensiblement égale à la distance entre les brides (13) de l'élément tubulaire (2).

5. Kit (1) selon l'une quelconque des revendications précédentes, **caractérisé en ce que** ledit élément de connexion (7) comporte une forme en « C ».

6. Kit selon l'une quelconque des revendications précédentes, où ledit élément de connexion (7) est configuré pour être disposé sur ladite surface externe (10) dudit élément tubulaire (2).

7. Ensemble (20) formé d'un élément tubulaire (2) et d'un distributeur de liquide (3) assemblés à partir du kit (1) selon l'une quelconque des revendications précédentes, où ledit distributeur (3) est verrouillé rigidement sur ledit élément tubulaire (2).

8. Ensemble (20) formé d'un élément tubulaire (2) et d'un distributeur de liquide (3) assemblés à partir du kit (1) selon l'une quelconque des revendications 1 à 6, où ledit distributeur (3) est libre de tourner par rapport audit élément tubulaire (2).
